Europäisches Patentamt

European Patent Office

Office européen des brevets

(11) Veröffentlichungsnummer : **0 046 539**
**B1**

(12) **EUROPÄISCHE PATENTSCHRIFT**

(19)

(45) Veröffentlichungstag der Patentschrift :
19.12.84

(21) Anmeldenummer : **81106288.4**

(22) Anmeldetag : **12.08.81**

(51) Int. Cl.³ : **B 62 J 11/00**

(54) **Verbindungsteil.**

(30) Priorität : **27.08.80 DE 3032312**

(43) Veröffentlichungstag der Anmeldung :
**03.03.82 Patentblatt 82/09**

(45) Bekanntmachung des Hinweises auf die Patenterteilung : **19.12.84 Patentblatt 84/51**

(84) Benannte Vertragsstaaten :
**AT BE CH FR GB IT LI LU NL SE**

(56) Entgegenhaltungen :
**DE-U- 7 707 615**
**US-A- 1 481 981**
**US-A- 1 529 983**

(73) Patentinhaber : **KRAUSER Kraftfahrzeug-Zubehör**
**Vertriebs-GmbH**
**Hörmannsbergerstrasse 18**
**D-8905 Mering (DE)**

(72) Erfinder : **Krauser, Michael**
**Obere Bahnhofstrasse 56 - 60**
**D-8034 Germering (DE)**

(74) Vertreter : **von Kirschbaum, Albrecht, Dipl.-Ing.**
**Hermann-Ehlers-Strasse 21a**
**D-8034 Germering (DE)**

## Beschreibung

Die Erfindung betrifft ein Verbindungsteil, insbesondere zum Verbinden von seitlich an Motorrädern angebrachten Halterungsteilen für Motorradkoffer u. ä., gemäß dem Oberbegriff des Anspruchs 1.

Ein bekanntes Verbindungsteil weist einen im wesentlichen flachen Querteil, der im allgemeinen durch eine oder mehrere in Längsrichtung des Querteils verlaufende Sicken versteift ist, sowie etwa senkrecht zu dem Querteil umgebogene Befestigungslaschen mit Langlöchern auf. Derartige Verbindungsteile werden dann zwischen die miteinander zu verbindenden, beispielsweise an Motorrädern angebrachten Halterungsteile, beispielsweise in Form von Packtaschenhalterungen, wie sie in dem DE-U-77 07 615 der Anmelderin dargestellt und beschrieben sind, eingesetzt und mittels Schrauben und Sicherungsmuttern an den beiden Halterungsteilen verschraubt. Ein derartiges Verbindungsteil ist in dem erwähnten Gebrauchsmuster der Anmelderin beispielsweise die Querverstrebung 5, durch die die beiden Packtaschenhalterungen 21 und 22 an deren in Fahrtrichtung des Motorrades hinteren Ende miteinander verbunden sind.

Da die Abstände zwischen den an einem Motorrad angebrachten Halterungsteilen von Motorradtyp zu Motorradtyp desselben Herstellers und erst recht bei Typen anderer Marken oft sehr unterschiedlich sind, müssen unterschiedlich lange Verbindungsteile hergestellt und bereitgehalten werden. So können beispielsweise die Abstände zwischen den zu verbindenden Halterungsteilen und damit die Längen der jeweiligen Verbindungsteile von 20 cm bis 35 cm und mehr variieren.

Da beispielsweise die in dem erwähnten DE-U-beschriebenen Packtaschenhalterungen in sich verhältnismäßig steif und stabil sind, müssen entsprechend bemessene Verbindungsteile vorliegen. Wenn die Längen der Verbindungsteile sich jeweils um 1 cm unterscheiden, würde das bei dem vorstehend angeführten Bereich von 20 bis 35 cm bedeuten, daß 16 unterschiedliche Querteile hergestellt und insbesondere von den Händlern bereitgehalten werden müssen. Selbst bei einer Längenabstufung von 2 cm müssen noch 9 unterschiedlich lange Verbindungsteile hergestellt und ebenfalls wieder gelagert und bereitgehalten werden.

Um sowohl die Herstellung als auch die Lagerung zu vereinfachen, sind L-förmige Verbindungsbügel vorgeschlagen und geschaffen worden, bei welchen der lange Schenkel in Längsrichtung geschlitzt ist und vorzugsweise in beiden Schenkelteilen in Längsrichtung zur Versteifung eine Sicke ausgebildet ist. In dem kurzen, zu dem langen Schenkel etwa unter 90° abgebogenen Schenkel des L-förmigen Verbindungsbügels war ein Langloch ausgebildet. Von diesen L-förmigen Verbindungsbügeln wurde je einer an einem der zu verbindenden Halterungsteile angebracht, und die langen Schenkel der beiden Teile wurden dann durch in den Schlitz eingeführte Schrauben und durch entsprechend stark angezogene Sicherungsmuttern fest miteinander verbunden. Durch die miteinander verbundenen, L-förmigen Verbindungsbügel, die dann eine Einheit bilden, soll insbesondere ein seitliches Schwingen der Halterungsteile und damit der an diesen angebrachten Motorradkoffer weitgehend unterbunden werden.

Da die Koffer maximal für 15 kg-20 kg zugelassen sind, werden, wenn die zulässige Zuladung in jedem Koffer voll ausgenutzt ist, in Richtung der langen Schenkel der miteinander verbundenen, L-förmigen Verbindungsbügel sehr große Kräfte ausgeübt, die, was praktisch unvermeidbar ist, im Laufe der Zeit zu einem Lockern der die beiden L-förmigen Verbindungsbügel sichernden Schrauben führen, wodurch dann das durch die beiden L-förmigen Verbindungsbügel geschaffene Verbindungsteil seinen eigentlichen Zweck verloren hat und das seitliche Schwingen der Halterungsteile mit den daran angebrachten Koffern in keiner Weise mehr gedämpft oder gar unterbunden wird. Da ein Lockern der die beiden L-förmigen Verbindungsbügel aneinander sichernden Schrauben, wie die Praxis gezeigt hat, unvermeidlich ist, haben sich solche aus zwei L-förmigen Verbindungsbügeln zusammengesetzte Verbindungsteile in der Praxis in keiner Weise bewährt und auch nicht durchgesetzt, obwohl nur noch ein Teil hergestellt und gelagert werden müßte.

Gemäß der Erfindung soll daher ein aus zwei einfach herzustellenden, L-förmigen Verbindungsbügeln zusammengesetztes Verbindungsteil geschaffen werden, mit welchem zumindest die gleiche feste Verbindung, beispielsweise zwischen zwei an einem Motorrad angebrachten Halterungsteilen für Motorradkoffer, wie mit einem einzigen, einteiligen Verbindungsteil erhalten werden kann. Gemäß der Erfindung ist dies bei einem Verbindungsteil nach dem Oberbegriff des Anspruchs 1 durch die Merkmale im kennzeichnenden Teil des Anspruchs 1 erreicht. Vorteilhafte Weiterbildungen der Erfindung sind in den Unteransprüchen angegeben.

Bei dem erfindungsgemäßen Verbindungsteil sind die beiden in einem vorgegebenen Abstand parallel zueinander verlaufenden Schenkelteile des langen Schenkels eines Verbindungsbügels höhenmäßg gegeneinander versetzt und in den beiden Schenkelteilen sind mittig parallel zur Schenkellängsachse in gleichen Abständen voneinander Löcher bzw. Noppen ausgebildet. Aufgrund dieser erfindungsgemäßen Ausbildung der langen Schenkelteile eines Verbindungsbügels können diese Schenkelteile entsprechend dem Abstand der mit dem Motorrad verbundenen Halterungsteile so ineinandergelegt werden, daß jeweils die Noppen des einen Schenkelteils in die entsprechenden Löcher des anderen Schenkelteils eingreifen, und dann werden durch Schraubbolzen mit aufgeschraubten, gesicherten Muttern die langen Schenkel vollkommen verschiebungssicher aneinander gehaltert. Die Schrauben haben bei dem erfindungsgemäßen Verbindungsteil nur noch die Aufgabe, die beiden langen Schenkel der Verbindungsbügel fest aneinander zu halten, und im Unterschied zu den eingangs beschriebenen, L-förmigen Verbindungsbügeln, bei denen der lange Schenkel jeweils geschlitzt ist, brauchen bei dem erfindungsgemäßen Verbindungsteil die Schrauben keine seitlichen, in Längsrichtung der langen Schenkelachse wirkenden Kräfte aufnehmen, da diese Kräfte vollkommen von den in die Löcher eingreifenden Noppen der einander zugeordneten Schenkelteile aufgenommen werden.

Gemäß einer vorteilhaften Weiterbildung der Erfindung sind die beiden Schenkelteile jedes L-förmigen Verbindungsbügels höhenmäßig so gegeneinander versetzt, daß die Unterseite des einen Schenkelteils in derselben Ebene wie die Oberseite des anderen Schenkelteils desselben Verbindungsbügels liegt, wobei die in dem einen Schenkelteil ausgebildeten Noppen von dieser gemeinsamen Ebene vorstehen. Bei zwei ineinandergelegten und durch die Schrauben aneinander gesicherten Verbindungsbügeln liegen dann die Ober- bzw. Unterseiten der entsprechenden Schenkel in dem Bereich, in dem sich die beiden Schenkelteile der beiden Verbindungsbügel überdecken, in der gleichen Ebene. Durch die miteinander verbundenen Verbindungsteile ist dann eine ebene Fläche geschaffen, so daß an dem erfindungsgemäßen Verbindungsteil beispielsweise das Nummernschild angebracht werden könnte.

Vorzugsweise sind die mittig in jedem Schenkelteil ausgebildeten Noppen bzw. Löcher in Abständen von 1 cm angeordnet, da erfahrungsgemäß diese Abstufung ausreicht und bei diesem Abstand insbesondere der Schenkel, in welchem die Löcher ausgebildet sind, noch nicht so weit geschwächt ist, daß er in sich unstabil ist. Ein bevorzugtes Material für den erfindungsgemäßen Verbindungsbügel ist beispielsweise nichtrostendes Material, wie rostfreier Stahl.

Mit dem erfindungsgemäßen Verbindungsteil kann somit die gleiche, feste Verbindung wie bei einem einzigen, einteiligen Verbindungsteil erreicht werden, obwohl nur ein Verbindungsbügel hergestellt und bereitgehalten werden muß, was im Hinblick auf eine einfache Lagerung von ganz besonderem Vorteil ist. Obendrein sind zur Herstellung eines erfindungsgemäßen Verbindungsbügels nur zwei Arbeitsgänge erforderlich, wobei bei dem ersten Arbeitsgang der Verbindungsbügel gestanzt wird und bei dem zweiten Arbeitsgang die Befestigungslasche etwa senkrecht zu dem langen Schenkel umgebogen wird.

Eine bevorzugte Ausführungsform der Erfindung wird nunmehr anhand der Zeichnung beschrieben. Es zeigen :

Figur 1 eine Seitenansicht eines Verbindungsteils, bei welchem die erfindungsgemäßen Verbindungsbügel ineinander angeordnet sind ;

Figur 2 eine Unteransicht der ineinander angeordneten Verbindungsbügel des Verbindungsteils der Fig. 1 ;

Figur 3 eine Vorderansicht eines einzelnen Verbindungsbügels, und

Figur 4 eine Schnittansicht entlang der Linie IV-IV in Fig. 2.

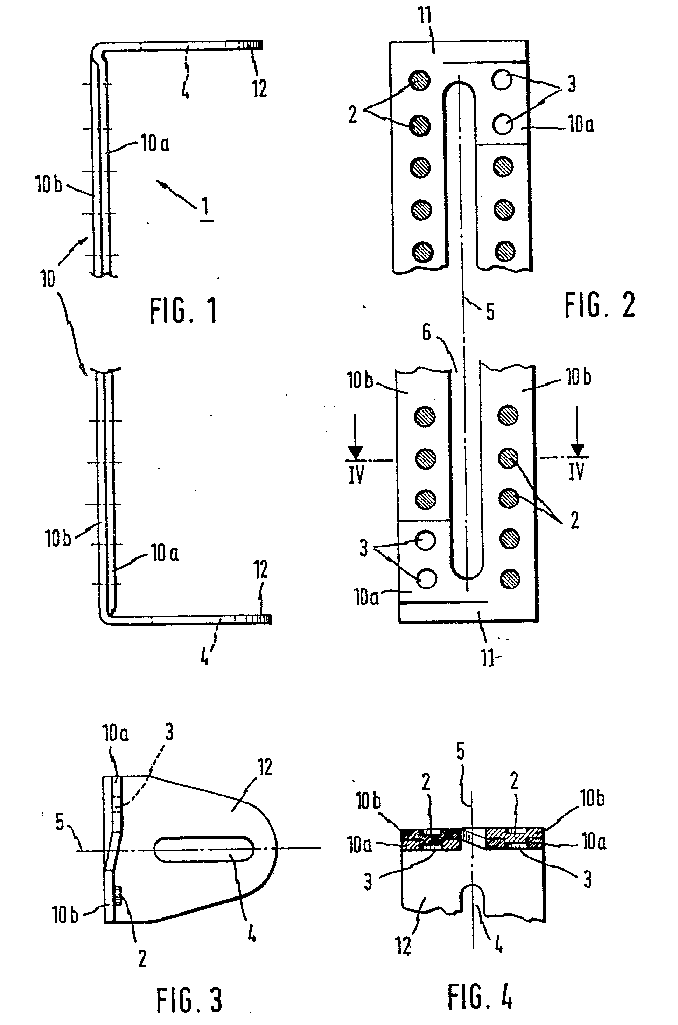

In Fig. 1 ist eine Seitenansicht, und in Fig. 2 ist eine Unteransicht oder Draufsicht eines Verbindungsteils aus zwei ineinander angeordneten Verbindungsbügeln 1 dargestellt. Jeder Verbindungsbügel 1 besteht aus einem langen Schenkel 10 und einem zu diesem um 90° umgebogenen, als Befestigungslasche dienenden, kurzen Schenkel 12, wobei die beiden Schenkel durch einen schmalen Verbindungssteg 11 miteinander verbunden sind. Der lange Schenkel 10 weist zwei in Abstand voneinander parallel zu seiner Längsachse 5 angeordnete Schenkelteile 10a und 10b auf, die durch den schmalen Verbindungssteg 11 miteinander verbunden sind. In Längsrichtung des Schenkelteils 10a sind mittig in gleichen Abständen voneinander Löcher 3 ausgebildet, während in dem parallel dazu angeordneten Schenkelteil 10b ebenfalls in Längsrichtung mittig in entsprechenden Abständen Noppen 2 ausgebildet sind.

Über den Verbindungssteg 11 sind die beiden Schenkelteile 10a und 10b, wie deutlich aus Fig. 3 zu ersehen ist, derart zueinander höhenversetzt, daß bei der Darstellung der Fig. 3 die Unterseite des Schenkelteils 10b, in welchem die Noppen 2 ausgebildet sind, in derselben Ebene liegt, wie die Oberseite des Schenkelteils 10a, in welchem die Löcher 3 ausgebildet sind. Wenn gemäß der vorstehenden Beschreibung ausgebildete Verbindungsbügel entsprechend dem geforderten Abstand von beispielsweise an einem Motorrad angebrachten Halterungsteilen ineinandergelegt werden, greifen die Noppen 2 des einen Schenkelteils 10b in die Löcher 3 des anderen Schenkelteils 10a jedes Verbindungsbügels ein, wie beispielsweise deutlich aus Fig. 4 zu ersehen ist. Aufgrund der höhenmäßigen Versetzung der beiden Schenkelteile 10a und 10b eines Verbindungsbügels 1 liegen dann beispielsweise bei der Schnittansicht in Fig. 4 die Oberseiten der beiden Schenkelteile 10b bzw. die Unterseiten der beiden Schenkelteile 10b der beiden ineinandergelegten Verbindungsbügel jeweils in der gleichen Ebene.

Wenn die beiden Verbindungsbügel 1 dann so ineinandergelegt sind, daß die kurzen, als Befestigungslaschen dienenden Schenkel 12 außen den geforderten Abstand der beiden miteinander zu verbindenden Halterungsteile aufweisen, werden in den Schlitz 6 zwischen den beiden Schenkelteilen 10a und 10b der beiden ineinandergelegten Verbindungsbügel vorzugsweise zwei in der Zeichnung nicht näher dargestellte Flachkopfschrauben eingesetzt, die auf der Kopfunterseite vorzugsweise einen der Breite des Schlitzes 6 entsprechenden Vierkant aufweisen ; auf diese Schrauben wird dann von der Gegenseite ein Sprengring und eine Mutter aufgeschraubt und fest angezogen, so daß dann die beiden Verbindungsbügel in der vorgesehenen Lage fest miteinander verbunden sind. Das feste Verbindungsteil wird dann mit seinen beiden Befestigungslaschen 12 zwischen beispielsweise an den Halterungsteilen angebrachten Befestigungslaschen eingeführt und mittels zwei Schrauben mit gesicherten Muttern an den Halterungsteilen befestigt.

Da alle zwischen den an einem Motorrad angebrachten Halterungsteilen über das erfindungsgemäße Verbindungsteil 1 übertragenen, in Richtung der beiden Schenkelteile 10a und 10b der beiden miteinander verbundenen Verbindungsbügel wirkenden Kräfte vollkommen von den genau in die Löcher 3 passenden Noppen des jeweiligen Schenkelteils 10b aufgenommen werden, sind die beiden durch die Schrauben fest miteinander verbundenen Verbindungsbügel 1 vollkommen verschiebungssicher aneinander gehalten. Die in Längsrichtung der Schenkelteile 10a und 10b verlaufenden Kräfte wirken daher auch in keiner Weise auf die zwei fest angezogenen Verbindungsschrauben, die somit durch diese Kräfte auch nicht gelockert werden können. Wenn die gemäß der Erfindung ausgebildeten Verbindungsbügel, so wie vorstehend beschrieben, ineinandergelegt und durch die zwei Schrauben fest miteinander verbunden sind, ist ein Verbindungsteil geschaffen, durch das die beiden zu verbindenden Halterungsteile genauso fest verbunden sind wie durch ein einziges, einstückiges Verbindungsteil. Wenn der lange Schenkel eines gemäß der Erfindung ausgebildeten Verbindungsbügels etwa 20 cm mißt, und die Noppen 2 bzw. die Löcher 3 in Abständen von 1 cm ausgebildet sind, weisen, wenn alle Noppen in die entsprechenden Löcher der beiden Verbindungsbügel eingreifen, die Befestigungslaschen außen einen Abstand von etwa 21 cm auf, während, wenn beispielsweise nur noch fünf Noppen jedes Schenkelteils 10b in die entsprechenden Löcher 3 des anderen Schenkelteils 10a der beiden Verbindungsbügel 1 eingreifen, die Befestigungslaschen 12 in einem Abstand von etwa 34 cm angeordnet sind. Das heißt, mit einem in der Länge verstellbaren Verbindungsteil aus solchem etwa 19 cm langen, gemäß der Erfindung ausgebildeten Verbindungsteilen können in Stufen von 1 cm in Abständen von 21 bis 34 cm voneinander angeordnete Teile fest und verschiebungssicher miteinander verbunden werden.

## Ansprüche

1. Verbindungsteil, insbesondere zum Verbinden von seitlich an Motorrädern angebrachten Halterungsteilen für Motorradkoffer u. ä., aus zwei gleichen, L-förmigen, durch Schrauben und gesicherte Muttern fest miteinander verbundenen Verbindungsbügeln, deren langer Schenkel jeweils in Längsrichtung geschlitzt ist und in deren kurzen, als Befestigungslasche dienenden Schenkel ein Langloch ausgebildet ist, dadurch gekennzeichnet, daß die beiden, in einem vorbestimmten Abstand parallel zueinander verlaufenden Schenkelteile (10a, 10b) des langen Schenkels (10) eines Verbindungsbügels (1) höhenmäßig gegeneinander versetzt sind, und daß in dem einen Schenkelteil (10a) parallel zur Schenkellängsachse mittig in gleichen Abständen voneinander ausgebildete Löcher (3) und in dem anderen Schenkelteil (10b) ebenfalls parallel zur Schenkellängsachse mittig in entsprechenden Abständen voneinander ausgebildete Noppen (2) vorgesehen sind, so daß die langen Schenkel (10) von zwei Verbindungsbügeln (1) entsprechend dem Abstand der an einem Motorrad angebrachten Halterungsteile so ineinanderlegbar sind, daß jeweils die Noppen (2) in dem einen Schenkelteil (10b) jedes Verbindungsbügels (1) in entsprechende Löcher (3) in dem anderen Schenkelteil (10a) jedes Verbindungsbügels (1) eingreifen, und durch die Schaubbolzen mit den gesicherten Schrauben miteinander vollkommen verschiebungssicher gehaltert sind.

2. Verbindungsteil nach Anspruch 1, dadurch gekennzeichnet, daß die beiden in einem vorgegebenen Abstand voneinander angeordneten Schenkelteile (10a, 10b) durch einen Verbindungssteg (11) und die Befestigungslasche (12) miteinander verbunden und so gegeneinander höhenversetzt sind, daß die Unterseite des einen Schenkelteils (10b bzw. 10a) in derselben Ebene liegt wie die Oberseite des anderen Schenkelteils (10a bzw. 10b), wobei die Noppen (2) von dieser Ebene vorstehen, so daß bei ineinandergelegten und aneinander gesicherten Verbindungsbügeln (1) auch die Ober- bzw. Unterseiten der entsprechenden Schenkel (10a, 10b) jeweils in derselben Ebene liegen.

3. Verbindungsteil nach einem der Ansprüche 1 oder 2, dadurch gekennzeichnet, daß die Löcher (3) und die Noppen (2) in den beiden Schenkelteilen (10a, 10b) vorzugsweise in einem Abstand von 1 cm ausgebildet sind.

4. Verbindungsteil nach einem der vorhergehenden Ansprüche, dadurch gekennzeichnet, daß die Verbindungsbügel (1) aus nichtrostendem Material, wie rostfreiem Stahl, hergestellt sind.

## Claims

1. Connecting part, particularly for the connecting of mounting parts which are situated laterally at motor cycles and are for motor cycle panniers and similar, of two like L-shaped connecting brackets, which are firmly connected one with the other by screws and secured nuts and the long limb of which is slotted in longitudinal direction each time and in the short limb — serving as fastening strap — of which an elongate hole is formed, characterised thereby, that both the limb parts (10a, 10b) of the long limb (10) of a connecting bracket (1) extend parallely each to the other at a predetermined spacing and are displaced in height one relative to the other and that holes (3) formed at equal spacings one from the other centrally and parallely to the longitudinal axis in the one limb part (10a) and bosses (2) likewise formed at corresponding spacings one from the other centrally and parallely to the longitudinal axis in the other limb part (10b) are provided, so that the long limbs (10) of two connecting brackets (1) are so layable one into the other in accordance with the spacing of the mounting parts situated on a motor cycle that the bosses (2) in the one limb part (10b) of each connecting bracket (1) respectively engage into corresponding holes (3) in the other limb part (10a) of each connecting bracket (1) and are retained completely secure against displacement each with the other through the threaded bolts with the secured screws.

2. Connecting part according to claim 1, characterised thereby, that both the limb parts (10a, 10b), which are arranged at a predetermined spacing each from the other, are connected each with the other through a connecting web (11) and the fastening strap (12) and so displaced in height each relative to the other that the underside of the one limb part (10b or 10a) lies in the same plane as the upper side of the other limb part (10a or 10b), wherein the bosses (2) project from this plane so that also the upper sides and undersides respectively of the corresponding limbs (10a, 10b) each lie in the same plane when the connecting brackets (1) are laid one into the other and secured each to the other.

3. Connecting part according to one of the claims 1 or 2, characterised thereby, that the holes (3) and the bosses (2) in both the limb parts (10a, 10b) are formed preferably at a spacing of one centimetre.

4. Connecting part according to one of the preceding claims, characterised thereby, that the connecting brackets (1) are manufactured of non-rusting material such as stainless steel.

**Revendications**

1. Pièce de raccordement, notamment pour assembler des éléments de fixation montés latéralement sur des motocyclettes afin de retenir une mallette de motocyclette, constituée par deux étriers de liaison identiques, en L, réunis solidement l'un à l'autre au moyen de vis et d'écrous bloqués, dont la grande branche est fendue dans le sens longitudinal et dont la petite branche qui sert de patte de fixation présente un trou allongé longitudinalement, caractérisée en ce que les deux parties (10a, 10b) de la grande branche (10) d'un étrier de liaison (1), s'étendant parallèlement l'une à l'autre à une distance déterminée, sont décalées de niveau l'une par rapport à l'autre, et il est prévu au milieu de l'une des parties (10a) des trous (3) disposés parallèlement à l'axe longitudinal de la branche, à égale distance les uns des autres, tandis que dans l'autre partie de branche (10b) il est prévu des tétons (2) également disposés au milieu et parallèlement à l'axe longitudinal de la branche, à des distances correspondant à celles des trous (3), de sorte que les grandes branches (10) de deux étriers de liaison (1) peuvent être emboîtées l'une dans l'autre sur la distance comprise entre les organes de fixation montés sur une motocyclette, les tétons (2) prévus sur l'une des parties de branche (10b) de chaque étrier de liaison (1) s'engageant dans les trous (3) correspondants percés dans l'autre partie de branche (10a) de chaque étrier de liaison (1), ces branches étant solidement fixées l'une à l'autre, parfaitement calées en translation à l'aide des vis sur lesquelles sont serrés les écrous de blocage.

2. Pièce de raccordement, selon la revendication 1, caractérisée en ce que les deux parties de branche (10a, 10b) disposées à une distance déterminée l'une de l'autre sont reliées l'une à l'autre par une barrette de liaison (11) et par la patte de fixation (12) et sont décalées de niveau l'une par rapport à l'autre de façon que la face intérieure de l'une des parties de branche (10b ou 10a) se trouve dans le même plan que la face extérieure de l'autre partie de branche (10a ou 10b), les tétons (2) étant en relief par rapport à ce plan, de sorte que lorsque les étriers de liaison (1) sont emboîtés l'un dans l'autre et bloqués l'un contre l'autre, les faces extérieures et intérieures des ailes (10a, 10b) correspondantes se trouvent aussi respectivement dans le même plan.

3. Pièce de raccordement, selon l'une quelconque des revendications 1, 2, caractérisée en ce que, dans les deux parties de branche (10a, 10b), la distance entre les trous (3) successifs et entre les tétons (2) successifs est égale à 1 cm.

4. Pièce de raccordement, selon l'une quelconque des revendications 1 à 3, caractérisée en ce que les étriers de liaison (1) sont réalisés en matériau non corrodable, par exemple en acier inoxydable.

FIG. 1

FIG. 2

FIG. 3

FIG. 4